# EUROPEAN PATENT APPLICATION

(11) **EP 3 343 337 A1**
(43) Date of publication of application: **04.07.2018**
(21) Application number: 15903970.0
(22) Date of filing: 16.12.2015
(51) Int. Cl.: G06F 3/048

(54) **METHOD AND DEVICE FOR CONTROLLING SCREEN BETWEEN TERMINALS, AND STORAGE MEDIUM**

(30) Priority: 14.09.2015 CN 201510583739
(71) Applicant: Baidu Online Network Technology (Beijing) Co., Ltd., Beijing 100085 (CN)
(72) Inventor: CHEN, Cong, Beijing 100190 (CN); ZHAO, Ke, Beijing 100190 (CN)
(74) Representative: Nederlandsch Octrooibureau
(86) International application number: PCT/CN2015/097575
(87) International publication number: WO 2017/045283

(57) **Abstract**

Embodiments of the present disclosure disclose a method and apparatus for screen event control between terminals and a storage medium, the method comprising: a first terminal collecting a touch control event caused by a user to a first screen deployed on the first terminal; and the first terminal generating revertive control information of the touch control event based on an event type of the touch control event and a first touch control position on the first screen, and transmitting the revertive control information to a second terminal, to instruct the second terminal to acquire a revertive control event of a second screen corresponding to the second terminal, determined based on the event type and the first touch control position. By the first terminal collecting the touch control event operated by the user, transmitting the touch control event to the second terminal, and the second terminal performing an operation corresponding to the revertive control operation, the embodiments of the present disclosure effectively reduce the difficulty in developing the revertive control between terminals, so that the screen control between terminals may support multiple events and achieve a precise revertive control of the handled events, thus improving the user's experience.

## Description

### CROSS-REFERENCE TO RELATED APPLICATION

This application claims the priority of Chinese Patent Application No. 201510583739.4, entitled "Method and Apparatus for Screen Control between Terminals and Storage Medium," filed by Baidu Online Network Technology (Beijing) Co., Ltd. as the applicant on September 14, 2015, the content of which is incorporated herein by reference in its entirety.

### TECHNICAL FIELD

Embodiments of the present disclosure relate to the field of smart terminal, in particular, to a method and apparatus for screen control between terminals and a storage medium.

### BACKGROUND

With the widespread use of smart terminal devices, the device varieties are also increasing. The function to utilize the screen touch control event acted on one terminal to control another terminal is becoming increasingly important, as the function provides, to a large extent, convenience in study, work and life. For example, when a vehicle is driven, it is quite inconvenient for the driver to hold a cell phone and perform serial operations. To this end, the driver may operate reversely the cell phone by performing corresponding operations by touching a vehicle-mounted terminal screen.

At present, an approximate revertive screen control effect between terminals is mainly achieved through data flow instructions, by binding fixed events under the interface controls on different terminals. That is, when performing a revertive screen control between two terminals, after the user performing a certain operation on a terminal interface, the terminal first identifies the operation and set a response mode in advance. Afterwards, the terminal transmits the response in the form of data flow instructions to another terminal, and the other terminal only needs to perform the response to complete the information interaction between the two terminals.

There is a certain flaw in the above revertive screen control technology between terminals. Since fixed events need to be bound under interface control units on different terminals, the difficulty in developing the screen revertive control between terminals increases and the number of supported screen events between terminals is relatively few. In addition, only approximate revertive control logic can be achieved on the basis of bound events, an accurate revertive control cannot be realized, which affects the user's experience.

### SUMMARY

In view of the above, the embodiments of the present disclosure provide a method and apparatus for screen control between terminals and a storage medium, in order to optimize the existing screen revertive control technology between terminals to improve the accuracy of the revertive control.

In a first aspect, the embodiments of the present disclosure provide a method for screen control between terminals, the method comprising:

a first terminal collecting a touch control event of caused by user to a first screen deployed on the first terminal; and

the first terminal generating revertive control information of the touch control event based on an event type of the touch control event and a first touch control position on the first screen and transmitting the revertive control information to a second terminal, to instruct the second terminal to acquire a revertive control event of a second screen corresponding to the second terminal, determined based on the event type and the first touch control position.

In a second aspect, the embodiments of the present disclosure also provide another method for screen control between terminals, the method comprising:

a second terminal receiving revertive control information from a first terminal, the revertive control information being generated based on an event type of a touch control event occurring at a first screen configured by the first terminal and a first touch control position on the first screen;

the second terminal acquiring an event type of a revertive control event corresponding to the touch control event and a second touch control position on a second screen deployed on the second terminal based on the revertive control information; and

the second terminal performing a corresponding operation based on the revertive control event.

In a third aspect, the embodiments of the present disclosure provide an apparatus for screen control between terminals, the apparatus comprising:

a touch control event collecting module, configured to collect a touch control event caused by a user to a first screen deployed on the first terminal; and

a revertive control information generating module, configured to generate revertive control information of the touch control event based on an event type of the touch control event and a first touch control position on the first screen, and transmit the revertive control information to a second terminal, to instruct the second terminal to acquire a revertive control event of a second screen corresponding to the second terminal, determined based on the event type and the first touch control position.

In a fourth aspect, the embodiments of the present disclosure also provide another apparatus for screen control between terminals, the apparatus is deployed on the second terminal, comprising:

a revertive control information receiving module, configured to receive revertive control information from a first terminal, the revertive control information being generated based on an event type of a touch control event occurring at a first screen configured by the first terminal and a first touch control position on the first screen;

a revertive control event acquiring module, configured to acquire an event type of a revertive control event corresponding to the touch control event and a second touch control position on a second screen deployed on the second terminal based on the revertive control information; and

an operation performing module, configured to perform corresponding operation based on the revertive control event.

In a fifth aspect, the embodiments of the present disclosure also provide a non-volatile computer storage medium storing one or more modules, when the one or more modules executed by a device performing the method for controlling a screen event between terminals, the device is used to perform the following operation:

a first terminal collecting a touch control event caused by a user to a first screen deployed on the first terminal; and

the first terminal generating revertive control information of the touch control event based on an event type of the touch control event and a first touch control position on the first screen, and transmitting the revertive control information to a second terminal, to instruct the second terminal to acquire a revertive control event of a second screen corresponding to the second terminal, determined based on the event type and the first touch control position.

In a sixth aspect, the embodiments of the present disclosure also provide another non-volatile computer storage medium storing one or more modules, when the one or more modules executed by a device performing the method for controlling a screen event between terminals, the device is used to perform the following operation:

a second terminal receiving revertive control information from a first terminal, the revertive control information being generated based on an event type of a touch control event occurring at a first screen configured by the first terminal and a first touch control position on the first screen;

the second terminal acquiring an event type of a revertive control event corresponding to the touch control event and a second touch control position on a second screen deployed on the second terminal based on the revertive control information; and

the second terminal performing corresponding operation based on the revertive control event.

After the main control terminal collecting the touch control event, the technical solution provided by the embodiments of the present disclosure directly transmit the event type and the touch control position information of the touch control event to the controlled terminal as revertive control information. The controlled terminal identifies the revertive control event corresponding to the controlled terminal screen based on the revertive control information, then performs corresponding operations based on the revertive control event. Compared to the traditional solution of the main control terminal identifying a response operation based on the touch control event and the controlled terminal passively receiving a solution of the response operation, the embodiments of the present disclosure transmit the touch control event itself to the controlled terminal, and the corresponding response operation is determined by the controlled terminal based on the screen operation performed by the revertive control event, therefore it is not necessary to set a correspondence relationship between the touch control event and the response operation in advance. The difficulty in developing the revertive control between terminals is reduced, and the supported screen events between terminals are increased, while achieving the precise feedback of the screen control and improving the user's experience.

### BRIEF DESCRIPTION OF THE DRAWINGS

Fig. 1 is a schematic flowchart of a method for screen control between terminals provided by the first embodiment of the present disclosure;
Fig. 2 is a schematic flowchart of a method for screen control between terminals provided by the second embodiment of the present disclosure;
Fig. 3 is a schematic flowchart of a method for screen control between terminals provided by the third embodiment of the present disclosure;
Fig. 4 is a schematic structural diagram of an apparauts for screen control between terminals provided by the fourth embodiment of the present disclosure;
Fig. 5 is a schematic structural diagram of an apparauts for screen control between terminals provided by the fifth embodiment of the present disclosure; and
Fig. 6 is a schematic digram showing a hardware structure of a device provided by the eighth embodiment of the present disclosure.

### DETAILED DESCRIPTION OF EMBODIMENTS

The present disclosure will be further described below in detail in combination with the accompanying drawings and the embodiments. It should be appreciated that the specific embodiments described herein are merely used for explaining the relevant invention, rather than limiting the invention. In addition, it should be noted that, for the ease of description, only the parts related to the relevant invention are shown in the accompanying drawings.

### Embodiment 1

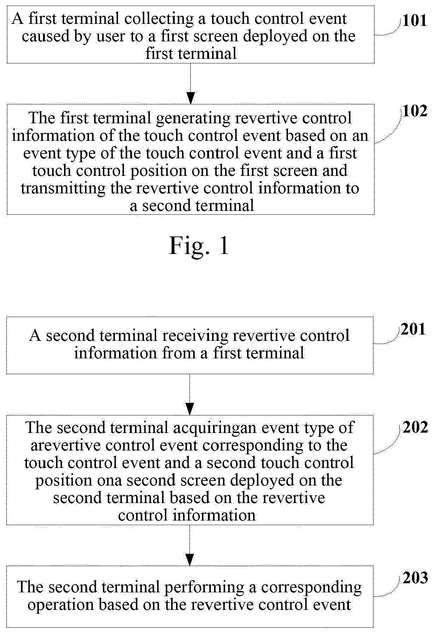

Fig. 1 is a schematic flowchart of a method for screen control between terminals provided by the first embodiment of the present disclosure. The present embodiment of the disclosure may be applied to a network architecture composed of at least two terminals and realize a screen control information exchange between any two terminals. As an example, the terminal may be a cell phone, a tablet computer or a vehicle phone with a touch screen function.

With reference to Fig. 1, the method specifically includes the following:
S101, a first terminal collecting a touch control event caused by a user to a first screen deployed on the first terminal.

In the present embodiment, the touch control event is a touch gesture operation at any position on the first screen of the first terminal. The collected touch event typically includes the event type and the touch position. Here, the event type may be click, double click, long press or drag. The first terminal may identify the event type of the touch control event by a preset specific private algorithm. The touch control position may correspond to the position of a point, line, or area and etc. on the first screen.

The first touch control position may be represented by the coordinates of the position on the first screen. In the present embodiment of the disclosure, to distinguish the touch control position from the touch control position on the second screen of the second terminal, the touch control position on the touch control event is recorded as the first touch control position, and the touch control position of the revertive control event corresponding to the touch control event is recorded as the second touch control position.

S102, the first terminal generating revertive control information of the touch control event based on an event type of the touch control event and a first touch control position on the first screen and transmitting the revertive control information to a second terminal.

In order to realize the transmission of the revertive control information, the first terminal and the second terminal are required to be connected. As an example, a long connection between the first terminal and the second terminal may be pre-established before the touch control event is collected. Here, the long connection may be a long connection based on a USB (Universal Serial Bus) mode or a WIFI (Wireless Fidelity) mode. Certainly, it is also possible to temporarily establish a short connection between the first terminal and the second terminal after the revertive control information is obtained, and transmit the revertive control information to the second terminal based on the short connection.

In a specific implementation of the present embodiment, the first terminal directly adds the event type of the touch control event and the first touch control position to the revertive control information and transmits the revertive control information to the second terminal. In this way, the second terminal, after acquiring the revertive control information, needs to calculate a second touch control position of the revertive control event on the screen of the second terminal based on the first touch control position in the revertive control information and the screen information of the first screen and the second screen. Further, the second terminal determines the revertive control event corresponding to the touch control event, the event type of the revertive control event is the event type of the touch control event, and the touch control position is the second touch control position.

In another specific implementation of the present embodiment, the first terminal may further convert the first touch control position to the second touch control position on the second screen of the second terminal after obtaining the event type of the touch control event and the first touch control position. Specifically, S102 includes: the first terminal calculates a second touch control position of the revertive control event on the second screen corresponding to the touch control event based on the first touch control position of the touch control event on the first screen and the screen information of the first screen and the second screen. The first terminal adds the event type and the second touch control position to the revertive control information and transmits the revertive control information to the second terminal.

In order to realize the conversion between the first touch control position and the second touch control position, it is necessary for the first terminal and the second terminal to be informed of the screen information of each other in advance. Here, the screen information includes the screen resolution, the screen size, etc. The screen size includes the width and height of the screen. As an example, the first terminal and the second terminal may interact the screen information of the first screen and the second screen when a connection is established between the first terminal and the second terminal. Preferably, a handshake protocol may be adopted to achieve interaction of the screen information.

The technical solution provided by the present embodiment, rather than further identifying the response operation based on the touch control event after the main terminal collected the touch control event, it directly transmits the event type and the touch control position information of the touch control event to the controlled terminal as the revertive control information, to instruct the controlled terminal to identify the revertive control event corresponding to the controlled terminal screen based on the revertive control information, and perform corresponding operation based on the revertive control event. As a result, the difficulty in developing the revertive control between terminals is reduced, and the supported screen events between terminals are increased, while achieving the precise feedback of the screen control and improving the user's experience.

### Embodiment 2

Fig. 2 is a schematic flowchart of another method for screen control between terminals provided by the second embodiment of the present disclosure. The method for screen control between terminals provided by the present embodiment may be performed in conjunction with the method for screen control between terminals provided in the above embodiment. Referring to Fig. 2, the method specifically includes the following:
S201, a second terminal receiving revertive control information from a first terminal.

Here, the revertive control information is generated based on the event type of the touch control event occurring at a first screen configured by the first terminal and a first touch control position on the first screen. For example, the revertive control information received by the second terminal may be one of two types of the revertive control information: a first type revertive control information and a second type revertive control information. The first type revertive control information includes: the event type of the touch control event and the first touch control position of the first screen. The second type revertive control information includes: the event type and the revertive control event in the second touch control position of the second screen. The event type contained in the second type revertive control information is the event type of the touch control event, and also is the event type of the revertive control event. The event type includes click, double click, long press and drag.

S202, the second terminal acquiring an event type of a revertive control event corresponding to the touch control event and a second touch control position on a second screen deployed on the second terminal based on the revertive control information.

In a specific implementation of the present embodiment, the revertive control information received by the second terminal is the first type revertive control information, and S202 specifically includes:
the second terminal acquires the event type of the touch control event and the first touch control position from the revertive control information, the event type is the event type of the revertive control event;
the second terminal calculates the second touch control position of the revertive control event on the second screen corresponding to the touch control event, based on the first touch control position of the touch control event on the first screen and the screen information of the first screen and the second screen.

In another implementation of the present embodiment, the revertive control information received by the second terminal is the second type revertive control information, and S202 specifically includes:
the second terminal acquires the event type of the revertive control event and the second touch control position.

S203, the second terminal performing a corresponding operation based on the revertive control event.

The second terminal can determine a unique revertive control event corresponding to the touch control event based on the obtained event type and the second touch control position, and performs an operation corresponding to the revertive control event. For example, the process of performing an operation includes: the second terminal transmitting the revertive control event to a screen drive program for processing, to perform the corresponding operation.

In the technical solution provided by the present embodiment, the revertive control information received by the controlled terminal is the event type and the touch control position information of the touch control event collected by the main control terminal. The controlled terminal identifies the revertive control event corresponding to the controlled terminal screen based on the revertive control information and performs corresponding operation based on the revertive control event. As a result, the difficulty in developing the revertive control between terminals is reduced, and the supported screen events between terminals are increased, while achieving the precise feedback of the screen control and improving the user's experience.

On the basis of the above technical solution, the method provided by the present embodiment further comprises:
the second terminal establishing a connection with the first terminal, and interacting with the first terminal the screen information of the first screen and the second screen.

### Embodiment 3

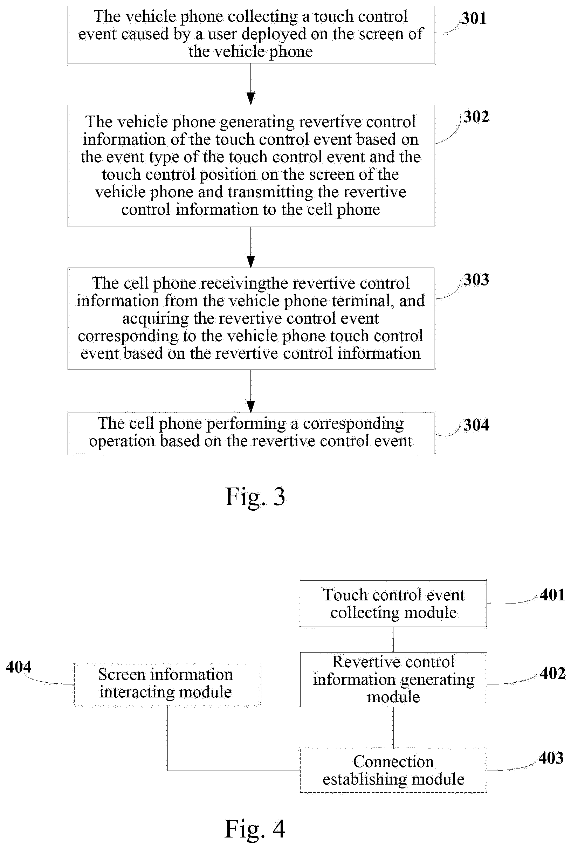

Fig. 3 is a schematic flowchart of a method for screen control between terminals provided by the third embodiment of the present disclosure. The present embodiment provides a preferred embodiment based on all of the above embodiments. In this embodiment, the two terminals for screen control are the vehicle phone and the smart cell phone, respectively. As an example, the first terminal is a vehicle phone and the second terminal is a smart cell phone.

Referring to Fig. 3, the method specifically includes the following:
S301, the vehicle phone collecting a touch control event caused by a user deployed on the screen of the vehicle phone.

The touch event collected by the vehicle phone includes the event type and the touch control position on the screen of the vehicle phone. As an example, the event type may be operations such as a click, a double click, a long press, or a drag on the screen of a vehicle phone.

S302, the vehicle phone generating revertive control information of the touch control event based on the event type of the touch control event and the touch control position on the screen of the vehicle phone and transmitting the revertive control information to the cell phone.

The vehicle phone and the cell phone are respectively installed with the cell phone client and the vehicle phone client. Before transmitting data between the vehicle phone and the cell phone, a long connection is established between the vehicle phone and the cell phone through the USB mode or the WIFI mode, and the screen information of the vehicle phone and the cell phone are interacted with each other. The screen information includes the screen size and the screen resolution.

Taking the touch control event is a click event as an example: the touch control position may be represented by a coordinate value (x1, y1) corresponding to the screen of the vehicle phone. The vehicle phone may transmit first type revertive control information containing the click event type and its position coordinates (x1, y1) on the screen of the vehicle phone to the cell phone; or, the vehicle phone may calculate the position coordinates (x2, y2) of the click event on the cell phone screen based on the position coordinates (x1, y1) of the click event on the screen of the vehicle phone and the screen information of the vehicle phone and the cell phone, and transmit the second type revertive control information containing the click event and its position coordinates (x2, y2) on the cell phone screen to the cell phone.

In the present embodiment, the revertive control information is used to instruct the cell phone to acquire the revertive control event corresponding to the cell phone screen determined based on the event type of the touch control event and the touch control position on the screen of the vehicle phone.

S303, the cell phone receiving the revertive control information from the vehicle phone terminal, and acquiring the revertive control event corresponding to the vehicle phone touch control event based on the revertive control information.

Still, taking the touch control event is a click event as an example to illustrate. If the cell phone receives first type revertive control information, the cell phone may directly read the first type revertive control information and get the click event type and the position coordinates (x1, y1) of the click event on the screen of the vehicle phone; afterwards, the position coordinates (X1, y1) are converted to the position coordinates (x2, y2) of the revertive control event on the cell phone screen corresponding to the click event by using the cell phone screen information and the vehicle phone screen information. If the cell phone receives second type revertive control information, the cell phone directly read the revertive control information and get the click event type and the position coordinates (x2, y2) of the information on the cell phone screen.

In the cases of non-click events such as double-click, long press, or drag, the non-click events may be decomposed into and handled as continuous click events. A plurality of continuous click events are acquired by the controlled terminal, and are identified and handled based on local processing rules for continuous click events.

S304, the cell phone performing a corresponding operation based on the revertive control event.

By providing the vehicle phone to collect the touch control event of the user, transmitting revertive control information generated by the touch control event to the cell phone, the cell phone receiving the revertive control information transmitted by the vehicle phone and acquiring revertive control event corresponding to the vehicle phone touch control event based on the revertive control information, the present preferred embodiment achieves a precise revertive control of the screen control between the vehicle phone and the cell phone and improves the user's experience.

### Embodiment 4

Fig. 4 is a schematic structural diagram of an apparauts for screen control between terminals provided by the fourth embodiment of the present disclosure. The apparatus is configured in a first terminal. The apparauts for screen control between terminals includes:
a touch control event collecting module 401, configured to collect a touch control event caused by a user to a first screen deployed on the first terminal;
a revertive control information generating module 402, configured to generate revertive control information of the touch control event based on an event type of the touch control event and a first touch control position on the first screen and transmit the revertive control information to a second terminal, to instruct the second terminal to acquire a revertive control event of a second screen corresponding to the second terminal determined based on the event type and the first touch control position;
On the basis of the above solution, preferably, it further includes:
   a connection establishing module 403, configured to establish a connection with the second terminal;
   a screen information interacting module 404, configured to interact with the second terminal screen information of the first screen and the second screen.

Further, the revertive control information generating module 402 is specifically configured to:
add the event type of the touch control event and the first touch control position to the revertive control information and transmit the revertive control information to the second terminal; or
calculate a second touch control position of the revertive control event on the second screen corresponding to the touch control event based on the first touch control position of the touch control event on the first screen and the screen information of the first screen and the second screen;
add the event type and the second touch control position to the revertive control information and transmit the revertive control information to the second terminal.

The above product may perform the method for screen control between terminals executed by the first terminal provided by any one of the embodiments of the present disclosure, and has corresponding function modules and advantageous effect to perform the method.

### Embodiment 5

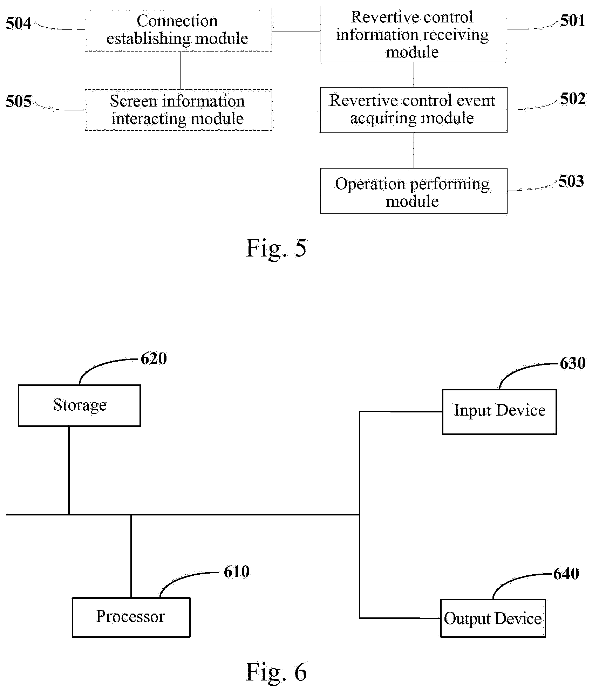

Fig. 5 is a schematic structural diagram of another apparauts for screen control between terminals provided by the fifth embodiment of the present disclosure. The apparatus is configured in a second terminal. The apparauts for screen control between terminals includes:
a revertive control information receiving module 501, configured to receive revertive control information from a first terminal, the revertive control information being generated based on an event type of a touch control event occurring at a first screen configured by the first terminal and a first touch control position on the first screen;
a revertive control event acquiring module 502, configured to acquire an event type of a revertive control event corresponding to the touch control event and a second touch control position on a second screen deployed on the second terminal based on the revertive control information;
an operation performing module 503, configured to perform a corresponding operation based on the revertive control event.

On the basis of the above solution, preferably, it further includes:
a connection establishing module 504, configured to establish a connection with the first terminal;
a screen information interacting module 505, configured to interact with the first terminal screen information of the first screen and the second screen.

Further, the revertive control event acquiring module 502 is specially configured to:
acquire the event type of the touch control event and the first touch control position from the revertive control information, the event type being the event type of the revertive control event;
calculate the second touch control position of the revertive control event on the second screen corresponding to the touch control event, based on the first touch control position of the touch control event on the first screen and the screen information of the first screen and the second screen; or
acquire the event type of the revertive control event and the second touch control position from the revertive control information.

The operation performing module 503 is specifically configured to:
transmit the revertive control event to a screen drive program for processing, to perform the corresponding operation.

The above product may perform the method for screen control between terminals executed by the second terminal provided by any one of the embodiments of the present disclosure, and has corresponding function modules and advantageous effect to perform the method.

### Embodiment 6

This embodiment provides a non-volatile computer storage medium storing one or more modules, the one or more modules when executed by a device for executing a method for controlling a screen event between terminals, causing the device to execute the following operations:
a first terminal collecting a touch control event caused by a user to a first screen deployed on the first terminal;
the first terminal generating revertive control information of the touch control event based on an event type of the touch control event and a first touch control position on the first screen, and transmitting the revertive control information to a second terminal, to instruct the second terminal to acquire a revertive control event of a second screen corresponding to the second terminal, determined based on the event type and the first touch control position.

When the modules stored in the above-mentioned storage medium are executed by the device, the processing further comprising:
the first terminal establishing a connection with the second terminal, and interacting with the second terminal screen information of the first screen and the second screen.

When the modules stored in the above-mentioned storage medium are executed by the device, the processing of the first terminal generating revertive control information of the touch control event based on an event type of the touch control event and a first touch control position on the first screen and transmitting the revertive control information to a second terminal may comprise:
the first terminal adding the event type of the touch control event and the first touch control position to the revertive control information and transmitting the revertive control information to the second terminal; or
the first terminal calculating a second touch control position of the revertive control event on the second screen corresponding to the touch control event, based on the first touch control position of the touch control event on the first screen and the screen information of the first screen and the second screen; the first terminal adding the event type and the second touch control position to the revertive control information and transmitting the revertive control information to the second terminal.

When the modules stored in the above-mentioned storage medium are executed by the device, the event type may include click, double click, long press and drag; and
the screen information may include a screen size and a resolution.

### Embodiment 7

This embodiment provides a non-volatile computer storage medium storing one or more modules, the one or more modules when executed by a device for executing a method for controlling a screen event between terminals, causing the device to execute the following operations:
a second terminal receiving revertive control information from a first terminal, the revertive control information being generated based on an event type of a touch control event occurring at a first screen deployed on the first terminal and a first touch control position on the first screen;
the second terminal acquiring an event type of a revertive control event corresponding to the touch control event and a second touch control position on a second screen deployed on the second terminal based on the revertive control information; and
the second terminal performing a corresponding operation based on the revertive control event.

When the modules stored in the above-mentioned storage medium are executed by the device, the processing further comprising:
the second terminal establishing a connection with the first terminal, and interacting with the first terminal screen information of the first screen and the second screen.

When the modules stored in the above-mentioned storage medium are executed by the device, the processing of the second terminal acquiring an event type of a revertive control event corresponding to the touch control event and a second touch control position on a second screen deployed on the second terminal based on the revertive control information may comprise:
the second terminal acquiring the event type of the touch control event and the first touch control position from the revertive control information, the event type being the event type of the revertive control event; the second terminal calculating the second touch control position of the revertive control event on the second screen corresponding to the touch control event, based on the first touch control position of the touch control event on the first screen and the screen information of the first screen and the second screen; or
the second terminal acquiring the event type of the revertive control event and the second touch control position from the revertive control information.

When the modules stored in the above-mentioned storage medium are executed by the device, the event type may include click, double click, long press and drag; and
the screen information may include a screen size and a resolution.

When the modules stored in the above-mentioned storage medium are executed by the device, the processing of the second terminal performing a corresponding operation based on the revertive control event may comprise:
the second terminal transmitting the revertive control event to a screen drive program for processing, to perform the corresponding operation.

### Embodiment 8

Fig. 6 is a schematic diagram of a device hardware structure for executing a method for controlling a screen event between terminals according to Embodiment 8 of the present disclosure.

The device comprises:
one or more processors 610, wherein one processor 610 is taken as an example in Fig. 6;
a memory 620; and one or more modules.

The device may further comprise: an input apparatus 630 and an output apparatus 640. The processor 610, the memory 620, the input apparatus 630, and the output apparatus 640 in the device may be connected via a bus or in other modes. Connection by a bus is used as an example in Fig. 6.

As a computer readable storage medium, the memory 620 may be used to store software programs, computer executable programs, and modules, for example, the program instructions/modules corresponding to the method for controlling a screen event between terminals in the embodiments of the present disclosure (for example, the touch control event collecting module 401, the revertive control information generating module 402, the connection establishing module 403, and the screen information interacting module 404 shown in Fig. 4; the revertive control information receiving module 501; the revertive control event acquiring module 502; the operation performing module 503; the connection establishing module 504 and the screen information interacting module 505 shown in Fig. 5). The processor 610 runs the software programs, instructions and modules stored in the memory 620 to execute various functional applications and data processing of a server, that is, to implement the method for screen event control between terminals of the above method embodiments.

The memory 620 may include a program storage area and a data storage area. The program storage area may store an operating system and an application required for at least one function. The data storage area may store data and the like created according to the usage of a terminal device. In addition, the memory 620 may include a high-speed random access memory, and may also include a non-volatile memory, e.g., at least one disk storage device, a flash memory device or other non-volatile solid-state storage devices. In some embodiments, the memory 620 may further include memories remotely arranged relative to the processor 610, where the remote memories may be connected to the terminal device by a network. An example of the above network includes but not limited to, the Internet, an enterprise intranet, a local area network, a mobile communications network, and a combination thereof.

The input apparatus 630 may be used for receiving entered digit or character information, and generating a key signal input related to the user setting and function control of the terminal device. The output apparatus 640 may include a display screen and other display devices.

The one or more modules stored in the memory 620, when executed by the one or more processors 610, perform the following operations:
a first terminal collecting a touch control event caused by a user to a first screen deployed on the first terminal;
the first terminal generating revertive control information of the touch control event based on an event type of the touch control event and a first touch control position on the first screen, and transmitting the revertive control information to a second terminal, to instruct the second terminal to acquire a revertive control event of a second screen corresponding to the second terminal, determined based on the event type and the first touch control position.

The operations may further comprise:
the first terminal establishing a connection with the second terminal, and interacting with the second terminal screen information of the first screen and the second screen.

Furthermore, the first terminal generating revertive control information of the touch control event based on an event type of the touch control event and a first touch control position on the first screen and transmitting the revertive control information to a second terminal may comprise:
the first terminal adding the event type of the touch control event and the first touch control position to the revertive control information and transmitting the revertive control information to the second terminal; or
the first terminal calculating a second touch control position of the revertive control event on the second screen corresponding to the touch control event, based on the first touch control position of the touch control event on the first screen and the screen information of the first screen and the second screen; the first terminal adding the event type and the second touch control position to the revertive control information and transmitting the revertive control information to the second terminal.

Furthermore, the event type may include click, double click, long press and drag; and
the screen information may include a screen size and a resolution.

Alternatively, the one or more modules perform the following operations:
a second terminal receiving revertive control information from a first terminal, the revertive control information being generated based on an event type of a touch control event occurring at a first screen deployed on the first terminal and a first touch control position on the first screen;
the second terminal acquiring an event type of a revertive control event corresponding to the touch control event and a second touch control position on a second screen deployed on the second terminal based on the revertive control information; and
the second terminal performing a corresponding operation based on the revertive control event.

Furthermore, the operations may further comprise:
the second terminal establishing a connection with the first terminal, and interacting with the first terminal screen information of the first screen and the second screen.

Furthermore, the second terminal acquiring an event type of a revertive control event corresponding to the touch control event and a second touch control position on a second screen deployed on the second terminal based on the revertive control information may comprise:
the second terminal acquiring the event type of the touch control event and the first touch control position from the revertive control information, the event type being the event type of the revertive control event; the second terminal calculating the second touch control position of the revertive control event on the second screen corresponding to the touch control event, based on the first touch control position of the touch control event on the first screen and the screen information of the first screen and the second screen; or
the second terminal acquiring the event type of the revertive control event and the second touch control position from the revertive control information.

Furthermore, the event type may include click, double click, long press and drag; and
the screen information may include a screen size and a resolution.

Furthermore, the second terminal performing a corresponding operation based on the revertive control event may comprise:
the second terminal transmitting the revertive control event to a screen drive program for processing, to perform the corresponding operation.

It is to be noted that the foregoing embodiments are merely preferred embodiments of the present disclosure, and the technical principles used thereby. Persons skilled in the art may understand that the present disclosure is not limited to the specific embodiments described herein. Persons skilled in the art may make various obvious changes, readjustments and substitutions without departing from the protection scope of the present disclosure. Therefore, although reference is made to the present disclosure in more detail in the foregoing embodiments, the present disclosure is not merely limited to the foregoing embodiments, more additional equivalent embodiments may be further included without departing from the conception of the present disclosure. The scope of the present disclosure is determined by the scope of the appended claims.

## Claims

1. A method for controlling a screen event between terminals, **characterized in that** the method comprises:
a first terminal collecting a touch control event caused by a user to a first screen deployed on the first terminal;
the first terminal generating revertive control information of the touch control event based on an event type of the touch control event and a first touch control position on the first screen, and transmitting the revertive control information to a second terminal, to instruct the second terminal to acquire a revertive control event of a second screen corresponding to the second terminal, determined based on the event type and the first touch control position.

2. The method according to claim 1, **characterized in that** the method further comprises:
the first terminal establishing a connection with the second terminal, and interacting with the second terminal screen information of the first screen and the second screen.

3. The method according to claim 2, **characterized in that** the first terminal generating revertive control information of the touch control event based on an event type of the touch control event and a first touch control position on the first screen and transmitting the revertive control information to a second terminal comprises:
the first terminal adding the event type of the touch control event and the first touch control position to the revertive control information and transmitting the revertive control information to the second terminal; or
the first terminal calculating a second touch control position of the revertive control event on the second screen corresponding to the touch control event, based on the first touch control position of the touch control event on the first screen and the screen information of the first screen and the second screen; the first terminal adding the event type and the second touch control position to the revertive control information and transmitting the revertive control information to the second terminal.

4. The method according to claim 2, **characterized in that**:
the event type includes click, double click, long press and drag; and
the screen information includes a screen size and a resolution.

5. A method for controlling a screen event between terminals, **characterized in that** the method comprises:
a second terminal receiving revertive control information from a first terminal, the revertive control information being generated based on an event type of a touch control event occurring at a first screen deployed on the first terminal and a first touch control position on the first screen;
the second terminal acquiring an event type of a revertive control event corresponding to the touch control event and a second touch control position on a second screen deployed on the second terminal based on the revertive control information; and
the second terminal performing a corresponding operation based on the revertive control event.

6. The method according to claim 5, **characterized in that** the method further comprises:
the second terminal establishing a connection with the first terminal, and interacting with the first terminal screen information of the first screen and the second screen.

7. The method according to claim 6, **characterized in that** the second terminal acquiring an event type of a revertive control event corresponding to the touch control event and a second touch control position on a second screen deployed on the second terminal based on the revertive control information comprises:
the second terminal acquiring the event type of the touch control event and the first touch control position from the revertive control information, the event type being the event type of the revertive control event; the second terminal calculating the second touch control position of the revertive control event on the second screen corresponding to the touch control event, based on the first touch control position of the touch control event on the first screen and the screen information of the first screen and the second screen; or
the second terminal acquiring the event type of the revertive control event and the second touch control position from the revertive control information.

8. The method according to claim 6, **characterized in that**:
the event type includes click, double click, long press and drag; and
the screen information includes a screen size and a resolution.

9. The method according to claim 5, **characterized in that** the second terminal performing a corresponding operation based on the revertive control event comprises:
the second terminal transmitting the revertive control event to a screen drive program for processing, to perform the corresponding operation.

10. An apparatus for controlling a screen event between terminals, **characterized in that** the apparatus is deployed on a first terminal, and the apparatus comprises:
a touch control event collecting module, configured to collect a touch control event caused by a user to a first screen deployed on the first terminal; and
a revertive control information generating module, configured to generate revertive control information of the touch control event based on an event type of the touch control event and a first touch control position on the first screen, and transmit the revertive control information to a second terminal, to instruct the second terminal to acquire a revertive control event of a second screen corresponding to the second terminal, determined based on the event type and the first touch control position.

11. The apparatus according to claim 10, **characterized in that** the apparatus further comprises:
a connection establishing module, configured to establish a connection with the second terminal; and
a screen information interacting module, configured to interact with the second terminal screen information of the first screen and the second screen.

12. The apparatus according to claim 11, **characterized in that** the revertive control information generating module is specifically configured to:
add the event type of the touch control event and the first touch control position to the revertive control information and transmit the revertive control information to the second terminal; or
calculate a second touch control position of the revertive control event on the second screen corresponding to the touch control event based on the first touch control position of the touch control event on the first screen and the screen information of the first screen and the second screen; add the event type and the second touch control position to the revertive control information and transmit the revertive control information to the second terminal.

13. An apparatus for screen event control between terminals, **characterized in that** the apparatus is configured in a second terminal, and the apparatus comprises:
a revertive control information receiving module, configured to receive revertive control information from a first terminal, the revertive control information being generated based on an event type of a touch control event occurring at a first screen configured by the first terminal and a first touch control position on the first screen;
a revertive control event acquiring module, configured to acquire an event type of a revertive control event corresponding to the touch control event and a second touch control position on a second screen deployed on the second terminal based on the revertive control information; and
an operation performing module, configured to perform a corresponding operation based on the revertive control event.

14. The apparatus according to claim 13, **characterized in that** the apparatus further comprises:
a connection establishing module, configured to establish a connection with the first terminal; and
a screen information interacting module, configured to interact with the first terminal screen information of the first screen and the second screen.

15. The apparatus according to claim 14, **characterized in that** the revertive control event acquiring module is specifically configured to:
acquire the event type of the touch control event and the first touch control position from the revertive control information, the event type being the event type of the revertive control event; calculate the second touch control position of the revertive control event on the second screen corresponding to the touch control event, based on the first touch control position of the touch control event on the first screen and the screen information of the first screen and the second screen; or
acquire the event type of the revertive control event and the second touch control position from the revertive control information.

16. The apparatus according to claim 13, **characterized in that** the operation performing module is specifically configured to:
transmit the revertive control event to a screen drive program for processing, to perform the corresponding operation.

17. A non-transitory computer storage medium storing one or more modules, **characterized in that** when the one or more modules are executed by a device performing a method for screen event control between terminals, cause the device performing the following operation:
a first terminal collecting a touch control event caused by a user to a first screen deployed on the first terminal; and
the first terminal generating revertive control information of the touch control event based on an event type of the touch control event and a first touch control position on the first screen, and transmitting the revertive3 control information to a second terminal, to instruct the second terminal to acquire a revertive control event of a second screen corresponding to the second terminal, determined based on the event type and the first touch control position.

18. A non-transitory computer storage medium storing one or more modules, **characterized in that** when the one or more modules are executed by a device performing a method for screen event control between terminals, cause the device performing the following operation:
a second terminal receiving revertive control information from a first terminal, the revertive control information being generated based on an event type of a touch control event occurring at a first screen configured by the first terminal and a first touch control position on the first screen;
the second terminal acquiring an event type of a revertive control event corresponding to the touch control event and a second touch control position on a second screen deployed on the second terminal based on the revertive control information; and
the second terminal performing a corresponding operation based on the revertive control event.
